# EUROPEAN PATENT APPLICATION

(11) **EP 1 150 523 A2**
(43) Date of publication of application: **31.10.2001**
(21) Application number: 01301028.5
(22) Date of filing: 06.02.2001
(51) Int. Cl.: H04Q 7/30

(54) **Supporting IP on Abis interface**

(30) Priority: 25.04.2000 GB 0010059; 21.08.2000 GB 0020579
(71) Applicant: LUCENT TECHNOLOGIES INC., Murray Hill, New Jersey 07974-0636 (US)
(72) Inventor: Xiaobao X, Chen, Swindon, Wiltshirfe SN5 5DQ (GB)
(74) Representative: Buckley, Christopher Simon Thirsk

(57) **Abstract**

In an EDGE system, an IP tunnel is provided between a BSC (16) and each BTS (18) which it supports; packets can then be tunneled across the circuit-switched Abis interface between the BSC and the BTS.

## Description

This invention relates to mobile telecommunications networks, such as the GSM (Global System for Mobile telecommunications) and especially to EDGE (Enhanced Data rates for GSM Evolution).

Conventional telephone networks are circuit switched, and naturally the early mobile telecommunications networks were also circuit switched. Later generations, such as the GPRS (General Packet Radio Service) are packet switched, and the use of the packet switched Internet Protocol (IP) is now increasing very rapidly.

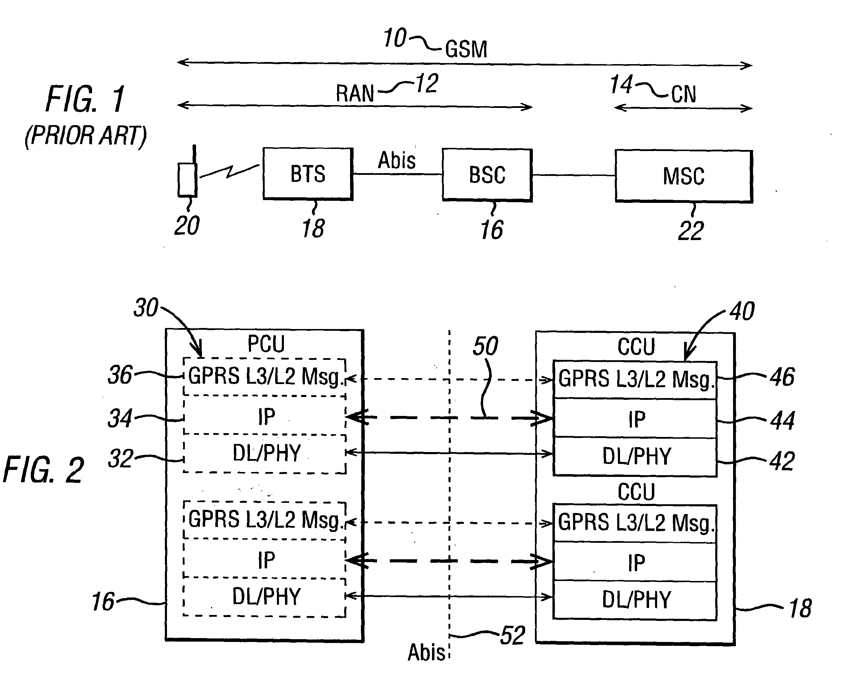

The second generation GSM is illustrated in Figure 1. The GSM 10 comprises a Radio Access Network (RAN) 12 and a Core Network (CN) 14. Within the RAN are a number of Base Station Controllers (BSCs) 16 each controlling a number of Base Transceiver Stations (BTSs) 18. The BSCs 16 and BTSs 18 communicate over the interface Abis, which is circuit switched. A mobile terminal 20 is associated with a BTS 18. Within the CN 14 are a number of Mobile Switching Centres (MSCs) 22. The CN 14 and the RAN 12 are both circuit switched.

With the rapid development of the use of IP, it is highly desirable to operate current equipment using IP; it is an object of the invention to provide an arrangement so that packet switched operation is possible over the Abis interface.

According to the invention the mobile telecommunications system comprising at least one primary network unit capable of supporting a plurality of secondary network units, each secondary network unit being capable of supporting a plurality of mobile users, the primary and secondary network units communicating across a circuit switched interface, characterized by means to provide an Internet Protocol tunnel between a primary network unit and a secondary network unit which it supports.

The network may be an EDGE network when the primary network unit is a BSC and the secondary network units are each a BTS.

In the accompanying drawings, Figure 1 illustrates the prior art. The invention will be described be by way of example only with reference to figures 2, 3 and 4 in which:-
Figure 2 illustrates IP tunneling over an Abis interface;
Figure 3 illustrates a typical packet construction; and
Figure 4 illustrates an IP tunnel.

Figure 2 illustrates the protocol stacks that deploy IP as the access/transport bearer for layer 3/2 message exchanges between a BSC 16 and a BTS 18. Within the BSC 16 there are several Packet Control Units (PCUs) 30 (two of which are illustrated) carrying three protocol layers; these are a Data Link (DL)/ Physical Layer (PHY) 32; an IP layer 34; and a GPRS layer 3/layer 2 (data traffic and signaling) message layer 36. Within BTS 18 there are two more Channel Codec Units (CCUs) such as 40, each having a Data Link layer (DL) /Physical Layer (PHY) 42, an IP layer 44, and a GPRS L3/L2 message layer 46. There is also an Abis interface 52 (a circuit switched interface) between the BSC 16 and the BTS 18.

In the inventive arrangement, an IP tunnel, such as tunnel 50, is set up between the IP layer 34 in BSC 16 and the IP layer 44 in BTS 18. When GPRS layer 2 messages are to be exchanged between layer 36 of the PCU 30 and layer 46 of the CCU 40, the messages can pass through the IP tunnel 50 and across the Abis interface 52; the messages or other data are carried in IP packets.

The IP tunnel is bi-directional, and the BSC 16 controls the set-up, the maintenance and the close or release of the tunnel. IP is used as the access as well as the transport bearer to tunnel the layer 2 and layer 3 messages.

Supporting the IP on the Abis interface in this way includes two aspects.
a) Using IP as the accessing mechanism/protocol
b) Using IP as the network routing mechanism/protocol.

While the invention will be exemplified based on the assumption of using IP as the accessing mechanism/protocol, underneath network links or routing/switching mechanisms may well be non-IP, such as ATM.

When IP is used as an accessing or addressing protocol, it is used to identify the traffic source, and the destination and the user data traffic/information is carried in the payload of IP packets that will then be routed to the required destination as indicated by the destination address. The routing protocol may be IP or non-IP such as ATM.

In the example in Figure 2, the DL layer/Physical Layer 32, 42 may operate by ATM.

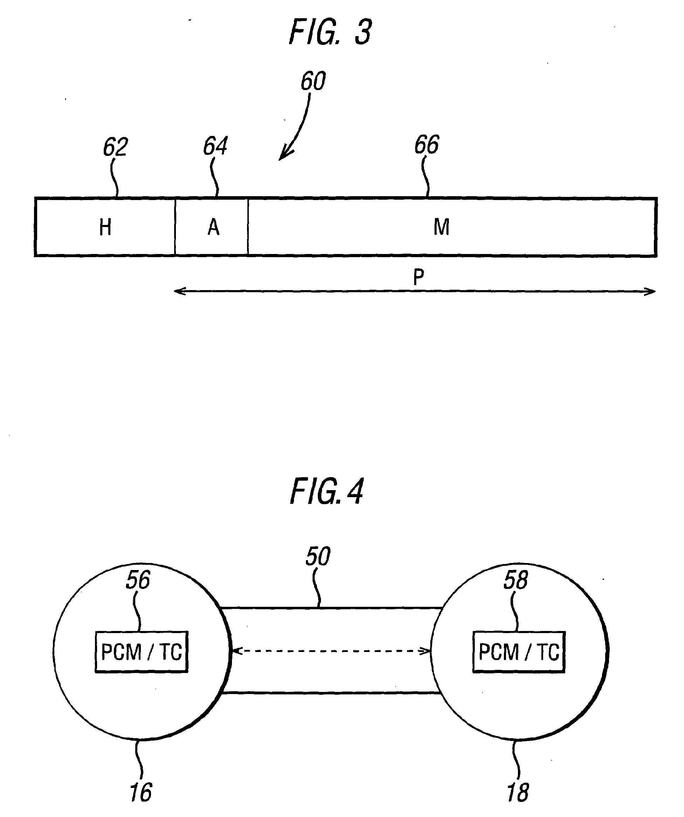

A typical packet construction is shown in Figure 3. The packet 60 has a header H 62 and a payload P which comprises an Abis-Message Type Field A 64 and a message M 66.

The AbisMMessage Type Field 64 is eight bits long and can therefore be any one of two hundred and fifty six messages; this field is used to identify the messages in the payload 66; the messages may be L3/L2 messages which may be multiplexed over the same IP tunnel between a pair of BTS and BSC, when the Abis field is used to de-multiplex the messages. Such use of an extra field can be regarded as a proprietary extension to the IETF (Internet Engineering Task Force) standard protocol.

Considering now the use of IP as a network routing mechanism; IP is used as a routing protocol to route IP packets across the network (between hosts/network nodes) across the network link. In this scenario, IP is used as the network layer routing protocol that is responsible for delivering the IP packets across the network to the destination. This scenario also explicitly excludes the use of ATM as the routing/switching mechanism.

In such a network, the BSC 16 and BTS 18 may form intermediate nodes in the route. The intermediate nodes, BTS and the BSC, will read the packet headers and send the packet to the correct destination. The packets are routed to the BSC 16 or the BTS 18 (depending on the direction, to or from the mobile 20) by providing the address of the BSC or the BTS as the destination address of the packet. The packet header and payload are transferred between the BSC and BTS through the IP tunnel 50 as before, and continue on their path.

It is important for the messages between the BSC 16 and the BTS 18 always to travel through the same tunnel 50. This can be achieved by using as the source and the destination address for packets, the explicit IP addresses of the BTS and BSC in the packet headers, and then transposing them to ensure that a return IP packet carrying the response Layer 2/Layer 3 messages travels by the same route.

In one arrangement, all layer2/layer3 messages for all CCUs in a BTS share the same IP tunnel with its corresponding BSC; the Abis Message Type Field is divided into two sub-fields, one to indicate the GPRS layer2/layer3 messages and the other indicating the CCU. In another arrangement, an IP tunnel is set up and used exclusively between the PCU and one CCU. No demultiplexing between the messages from different CCU is required.

With the arrangement described, the signaling and data messages are multiplexed over the same IP tunnel, i.e. tunnel 50, that provides "point-to-point" connectivity between the BTS 18 and the BSC 16. At the receiving side either the BTS (for the downlink) or the BSC (for the uplink) demultiplexes the tunneled Abis messages by indexing the Abis message type field.

Different processing and handling priorities can be achieved by filtering the corresponding fields in the IP header 62.

The selection and allocation of appropriate code and channels is based on packet handling priority information contained in the IP header 62 and the Abis Message Type Field 64.

The successful set up of a RR (Radio Resource ) session will activate an active "IP tunnel" associated with a specific set of codes and channels that have been allocated by the BSC. The necessary status record is set up corresponding to the IP tunnel.

De-allocation of a channel will de-activate an existing active IP tunnel and the associated status recorded will be deleted.

As a mobile 20 wanders so that radio resource handover is necessary, no handover recognition or decision is made by BTS 18. Once a handover decision is made, the BSC 16 issues an IP tunnel set-up command to the new BTS (for intra-BSC handover) and subsequently passes all the information related to the mobile 20 to the new BTS. After setting up a new IP tunnel to the new BTS, the BSC 16 issues an IP tunnel close command to close the old IP tunnel to BTS 18 associated with the mobile 20 which has just performed the handover.

The radio channel management and the terrestrial channel management are controlled by the BSC 16. No changes are required to existing control procedures.

The message sequences across the Abis interface are not affected by the IP tunneling. The additional messages and the message exchange sequences are related to the set-up, maintenance and the release of the IP tunnel as well as the multiplexing/demultiplexing operations of L3/L2 messages over the IP tunnel. Efforts are made to maintain a maximum openness of the message handling mechanisms between the L3/L2 functional layers and the IP tunnel layer so that further evolved mechanisms can be deployed.

Due to the simple fact that the IP tunnels provide a transparent bearer between the BTS and the BSC, and that no changes are incurred over the specifications of existing interfaces except that an IP tunnel layer is added with a minimum set of control messages and control procedures, the existing O&M (Operational & Maintenance support over current standardized interfaces is barely affected.

The existing packet prioritization and differentiation, as well as pre-emption mechanisms that have been or are being defined by IETF (Internet Engineering Task Force), can be leveraged to the greatest extent to achieve a flexible and effective IP packet priority and pre-emption. For example, explicit IP packet priority levels can be attached within the IP header and the associated pre-emption information is stored at the BTS and the BSC with the IP tunnel state records corresponding to each active IP tunnel. Another example is the DS (Differentiated Service) fields as defined in DiffServ can be exploited to achieve the appropriate packet priority and pre-emption combined with managed queuing.

With the use of IP tunnels for traffic transport between the BTS and BSC, existing IETF defined mechanisms such as DiffServ can be easily introduced for packet classification and for Quality of Service (QoS) and CoS (Class of Service) differentiation.

A simple model of an IP tunnel 50, connecting the BSC 16 and the BTS 18 is illustrated in Figure 4; the BSC and BTS each contain a Packet Classifier and Marker (PCM) and Traffic Conditioner (TC) 56, 58 respectively, attached at the respective ends of the tunnel 50. Each tunnel end point has an ID, tunnel ID (BSC) and tunnel ID (BTS) respectively; these IDs are used, in addition to the IP addresses of the BSC and BTS, in packet headers to ensure that packets are routed through the tunnel.

Each PCM/TC looks at the Abis Message Type Field in each packet, classifies the packet, and then places a packet differentiation marking in the IP header of each packet. The PCM classifies the tunneled Abis messages according to predefined rules.

The marking applied by each PCM/TC 56, 58 can be in DSCP format (Differentiated Service Code Point).

For each tunneling packet, its DSCP is checked and then used to decide a corresponding forwarding priority and the expected traffic transmission characteristics to be achieved by the selected forwarding behavior. A packet that exceeds the prenegotiated QoS will be re-marked by the PCM to be either the Best-Effort class or simply discarded by the TC.

Thus standard QoS mechanisms and real time traffic management mechanisms such as DiffServ, can be supported, in particular
i) traffic classification
ii) congestion management
iii) congestion avoidance
iv) queuing
v) backhaul diversity

Congestion management is achieved by proper traffic conditioning through a TC 56, 58 via the means such as traffic shaping and policing.

Congestion avoidance is achieved by using the TC (shaping/policing) in combination with a three way handshake Request-Reply-Ack) mechanisms that provides instant traffic processing and load information at each end of the IP tunnel.

Dynamic and flexible management of the IP tunnels can also facilitate congestion control.

Separate queues are set up and configured and appropriate scheduling (CBQ, 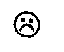 Class Based Queueing), WFQ (Weighted Fair Queueing), RED (Random Earliest Detection) are deployed in combination with the PCM/TC/DSCP to guarantee efficient and effective traffic separation (separating signaling from the user data) and the QoS/CoS differentiation.

Efforts can be made to guarantee maximum compatibility with the existing circuit switched interface Abis. Due to the nature of the transparent transport through the IP tunnels, the BTS (CCUs) and the BSC (PCUs) serve as the termination points for the IP tunnels where the Abis messages are extracted from the tunneling IP packet and send to the circuit-switched Abis interface. No message change or protocol conversion is required.

The invention has been described with reference to Figure 2 illustrating a BTS 18 and a BCS 16 in the GPRS/EDGE system with an IP tunnel between them. The invention is equally applicable to a PCU Packet Control Unit or its equivalent in a Radio Network Controller (RNC) and a CCU Channel Codec Unit or its equivalent in a Node B in the UMTS (Universal Mobile Telephone System). An IP tunnel can be set up to transfer packets in the same way. Thus upgrading of UMTS to EDGE is made easier because handover control is facilitated. This is largely because the connectivity which is frequently. switched on and off during the handover is achieved and maintained by the simple stateless IP accessing and routing mechanism that is independent of the underlying link layer control and transport mechanisms. As a result, it can dramatically reduce the processing overhead and the connection set-up delays as would be incurred by the connection-oriented mechanism. Furthermore, handover efficiency and reliability is expected to be improved by means of IP tunneling due to the dynamic routing capability of IP packets through the tunnels.

When the intermediate network link is ATM-based or is otherwise non-IP, then there will be no IP at the source or the destination to read the packet address. It is now necessary to use IP over ATM or IP switching or MPLS (Multi-Protocol Label Switching) in order to transport an IP packet through the network link. The description above about supporting IP based Abis applies to both RFC 791 standard (V4) and RFC 791 standard (V6).

While Figure 2 depicts the option of locating a PCU 30 in the BSC 16, the PCU maybe located at any other convenient position in the network.

As an alternative to using IP tunneling, TCP/IP (Transport Control Protocol IP) or UDP/IP (User Data Protocol IP) can be used for both information exchanges over the traffic channels and the signaling channels. With use of these protocols, it is not necessary to use any proprietary extension (equivalent to the inclusion of the Abis Message Type Field).

## Claims

1. A mobile communications system comprising at least one primary network unit (16) capable of supporting a plurality of secondary network units (18) each capable of supporting a plurality of mobile users (20), the primary and secondary network units communicating across a circuit switched interface (52), **characterized by** means (16) to provide an Internet Protocol tunnel (50) between a primary network unit and a secondary network unit which it supports.

2. A system according to Claim 1 in which the primary network unit is a Base Station Controller (16) and the secondary network unit is a Base Transceiver Station (18).

3. A system according to Claim 1 in which the primary network unit is a Radio Network Controller and the secondary network unit is a Node B.

4. A system according to Claim 2 in which the Internet Protocol tunnel is arranged between a Channel Codec Unit (40) in a Base Transceiver Station (18) and a Packet Control Unit (30) in a Base Station Controller (16), the Channel Codec Unit (40) and the Packet Control Unit (30) each comprising a Data link Layer/Physical Layer (32, 42) an Internet Protocol layer (34, 44) and a GPRS layer 3/layer 2 message layer (36, 46).

5. A system according to any preceding Claim in which each end of the Internet Protocol tunnel (50) is associated with a Packet Classifier and Marker (56, 58) in respectively each primary network unit (16) and each secondary network unit (18).

6. A system according to any preceding Claim in which the circuit switched interface is an Abis interface (52).

7. A system according to Claim 6 in which each packet passing between a primary and a secondary network unit (16, 18) is arranged to contain adjacent the packet header an Abis-message type field (64) which identifies the type of messages.

8. A system according to Claim 7 in which the Abis-type message field identifies the secondary network elements (40) in the BTS .

9. A system according to Claim 7 or Claim 8 in which the messages and the payload are multiplexed GPRS layer 3/layer 2 messages and the Abis-Message Type Field (64) is used to de-multiplex the messages on arrival of a packet at its destination.

10. A system according to any one of Claims 1 to 5 in which the circuit switched interface is an interface between a RNC and a Node B in a third generation mobile telecommunications network.
